# EUROPEAN PATENT APPLICATION

(11) **EP 1 260 422 A1**
(43) Date of publication of application: **27.11.2002**
(21) Application number: 02077150.7
(22) Date of filing: 22.05.2002
(51) Int. Cl.: B62B 7/08

(54) **Baby buggy**

(30) Priority: 23.05.2001 NL 1018141; 24.07.2001 NL 1018620
(71) Applicant: All Our Kids Europe B.V., 6224 LJ Maastricht (NL)
(72) Inventor: Bost, Bart Willem Jozef, 6221 EW Maastricht (NL)
(74) Representative: Voncken, Bartholomeus Maria Christiaan

(57) **Abstract**

The invention relates to a baby buggy comprising a collapsible frame consisting at least of a left-hand frame part and a right-hand frame part which are interconnected by means of linkages, in such a manner that the width of the frame can be reduced upon collapsing, and wherein each frame part carries at least one rear wheel. A front wheel connected to both frame parts is used, which wheel extends substantially in the plane of symmetry between the two frame parts, at least in the fully unfolded position of the frame. The front wheel furthermore takes up a stable position with respect to the frame, at least in the fully unfolded position of the frame.

## Description

The invention relates to a baby buggy comprising a collapsible frame consisting at least of a left-hand frame part and a right-hand frame part which are interconnected by means of linkages, in such a manner that the width of the frame can be reduced upon collapsing, and wherein each frame part carries at least one rear wheel. In the most common form of this type of baby buggy, each left-hand frame part and each right-hand frame part also carries a front wheel. Not only the width of the frame is reduced upon collapsing of the frame, but also the length thereof, because the left-hand frame part and the right-hand frame part are folded double upon collapsing. This movement is caused by the geometry of the linkages.

One drawback of this type of baby buggy is the fact that the large number of hinged joints between the component parts of the frame makes it difficult to ensure an exact alignment of the wheels in the fully unfolded position of the frame. A consequence of this is that the four wheels do not lie in one plane in some cases, so that the position of the baby buggy is unstable.

It is an object of the present invention to provide a baby buggy of the type referred to in the introduction, in which the aforesaid drawback has been eliminated in a simple but nevertheless efficient manner.

In order to accomplish that objective, the baby buggy according to the invention is characterized by a front wheel connected to both frame parts, which extends substantially in the plane of symmetry between the two frame parts, at least in the fully unfolded position of the frame, and which takes up a stable position with respect to the frame, at least in said fully unfolded position of the frame. In this way a baby buggy is obtained which occupies a stable position under all circumstances as a result of its three-wheel construction.

The basic idea of the invention as described in the foregoing can be embodied in various ways. Thus, a preferred embodiment of the baby buggy according to the invention is proposed wherein the front wheel is mounted in a bearing member which is connected to the frame parts by means of two connecting rods, wherein each connecting rod is hinged to the bearing member with one end, by means of a first hinge, and to the frame part in question with its other end, by means of a second hinge, and wherein the two first and/or second hinges take up an extreme hinged position in the fully unfolded position of the frame.

This construction allows the front wheel to lie substantially in the plane of symmetry between the two frame parts, also in positions other than the fully unfolded position of the frame (such as the fully collapsed position). The extreme hinged position of the two first and/or second hinges in the fully unfolded position of the frame effects the stable position of the front wheel with respect to the frame.

In addition to that it is possible for the two first and/or second hinges to take up an extreme hinged position in the fully collapsed position of the frame. As a result, a stable position of the front wheel with respect to the frame is also effected in the fully collapsed position of the frame.

There are various possibilities to realise the aforesaid extreme hinged position of the hinges. In this connection a special geometry of the hinges or the use of stops mating with the hinges can be considered.

In a specific embodiment of the baby buggy according to the invention, the extreme hinged position in the fully unfolded position of the frame, which position is defined by stops, concerns the first hinges in that case, whilst the extreme hinged position in the fully collapsed position of the frame, which is defined by the geometry thereof, concerns the second hinges. In the fully unfolded position of the frame, the first hinges abut against stops, as a result of which their hinge movement in one direction is stopped. In the fully collapsed position, the two hinges have reached an extreme positioned defined by their geometry, as a result of which further hinge movement in one direction is stopped. Thus, a stable position of the front wheel with respect to the frame is ensured in both extreme positions of the frame.

In a different embodiment of the baby buggy according to the invention, the front wheel is mounted in a bearing member which is fixedly connected to one of the two frame parts and movably connected to the other frame part. The fixed connection between the bearing member and one of the frame parts ensures a stable position of the front wheel in all positions. The collapsibility of the baby buggy is ensured by said movable connection with the other frame part; the front wheel no longer lies in the plane of symmetry in the fully collapsed position, however.

Within this framework it is possible in that case for the bearing member to be connected to the other frame part by means of a connecting rod, wherein the connecting rod is hinged to the bearing member with one end and to the frame part in question with its other end.

It is noted that the front wheel may be a multiple wheel. Furthermore it is possible to substitute the front wheel for a different type of support, such as a sphere, a ski or the like. Also the rear wheels of the baby buggy may be of a similar multiple construction, of course, or be substituted for such different types of support.

The invention will be explained in more detail hereinafter with reference to the drawing, which shows an embodiment of the baby buggy according to the invention.
Figure 1 is a perspective view of an embodiment of the baby buggy according to the invention;
Fig. 2 shows a detail of the baby buggy of Fig. 1 in front view;
Fig. 3 is a schematic view of the part of the baby buggy that is shown in Fig. 2, showing a first position thereof;
Fig. 4 shows a second position of said part;
Fig. 5 is a schematic view of a part of a baby buggy of different design, showing a first position thereof; and
Fig. 6 shows a second position of said part.

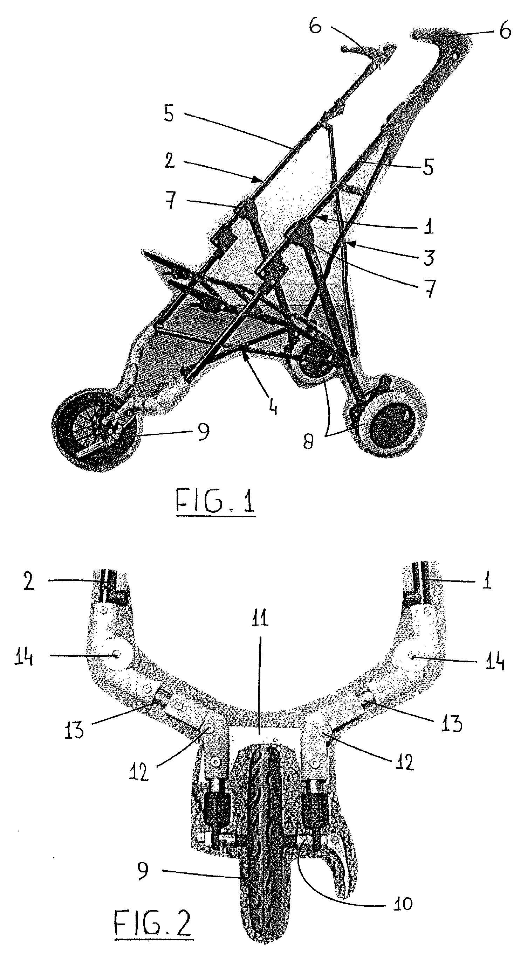

The baby buggy that is shown in perspective view in Fig. 1 is of the so-called umbrella buggy type. Such a type of baby buggy has a collapsible frame consisting at least of a left-hand frame part 1 and a right-hand frame part 2. Said left-hand and said right-hand frame part are interconnected by means of linkages 3 and 4, in such a manner that the frame can be collapsed as a whole. During this collapsing movement, the width of the frame (that is, the spacing between the left-hand frame part 1 and the right-hand frame part 2) can be reduced. As a result of the geometry of the component frame parts and the linkages 3 and 4, also the length of the frame is reduced upon collapsing, because the upper frame parts 5 (which are fitted with handles 6) will also hinge forward about hinged joints 7.

The two frame parts 1 and 2 carry rear wheels 8, configured as twin wheels in the illustrated embodiment.

So far, the construction of the baby buggy as described above is conventional.

A front wheel 9 is connected to the two frame parts 1 and 2. The nature of this connection will now be explained with reference to Fig. 2.

The front wheel 9 is mounted in an upside-down U-shaped bearing member 11 by means of an axle 10. Present on said bearing member 11 are two front hinges 12, by means of which respective connecting rods 13 are hinged to the bearing member 11. The respective opposite ends the connecting rods 12 are connected to the left-hand frame part 1 and the right-hand frame part 2, respectively, via a second hinge 14. The hinge axes of the hinges 12 and 14 generally extend parallel to each other.

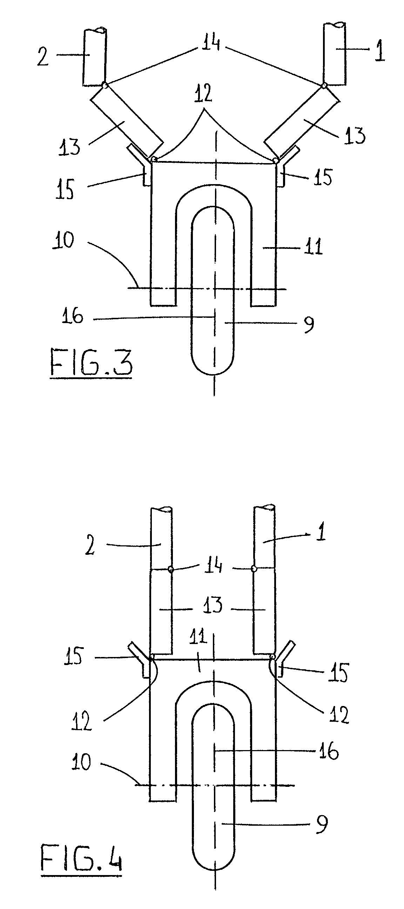

The operating principle of the connection between the front wheel 9 and the frame of the baby buggy that is shown in Fig. 2 will now be explained in more detail with reference to Figs. 3 and 4.

Figure 3 shows a position which corresponds to the position of the baby buggy that is shown in Fig. 1 (the fully unfolded position). The left-hand frame part 1 and the right-hand frame part 2 are spaced apart by a maximum distance that is determined by the linkages 3 and 4. The connecting rods 13 have been moved to a hinged position with respect to the bearing member 11, in which position they are arrested by stops 15 fixed to the bearing member 11. Based on the fact that the left-hand frame part 1 and the right-hand frame part 2 take up a fixed position relative to each other (as a result of the action of the linkages 3 and 4), the stops 15 ensure that the front wheel 9 will take up a stable, central position with respect to the frame. It is also possible to use stops which determine an extreme hinged position for the hinges 14 in the position that is shown in Fig. 3.

When the frame is collapsed from the position that is shown in Figs. 1 and 3 to the fully collapsed position that is shown in Fig. 4, the connecting rods 13 hinge simultaneously about their hinged joints 12 and 14. Once the fully collapsed position as shown in Fig. 4 has been reached, the ends of the connecting rods 13 and the respective frame parts 1 and 2 engage each other in such a manner that an extreme hinged position of the hinges 14 is defined. As a result, a stable position of the front wheel 9 with respect to the frame is effected in this fully collapsed position as well. In this position as shown in Fig. 4, the stops 15 are inoperative. It is conceivable, of course, for the hinges 12 to have reached an extreme hinged position in this position as well (because extra stops are used, for example, or because the bearing member 11 is directly engaged).

The position of the front wheel 9 with respect to the frame is not stable during the changeover from the position that is shown in Fig. 3 to the position that is shown in Fig. 4, and vice versa, because on the one hand the connecting rods 13 and the frame parts 1 and 2 are not in engagement with each other during said movement, whilst on the other hand the stops 15 are not functioning, either. In the extreme positions that are shown in Figs. 3 and 4, however, such a stable position has been effected, wherein furthermore the front wheel extends substantially in the plane of symmetry 16 between the two frame parts.

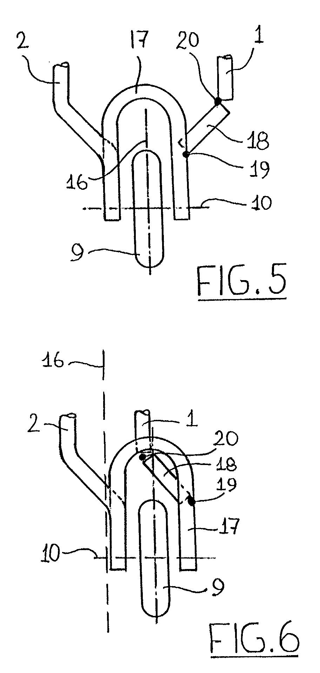

Figure 5 shows a part of an alternative construction of a baby buggy in the fully unfolded position thereof. A bearing member 17 is fixedly connected to the frame part 2, whereas it is movably connected to the frame part 1 via a connecting rod 18. A hinge 19 is present between the bearing member 17 and the connecting rod 18, and a hinge 20 is present between the connecting rod 18 and the frame part 1. In this position, the plane of symmetry 16 coincides with the plane of symmetry of the front wheel 9. In a fully collapsed position (Fig. 6), the front wheel lies outside the plane of symmetry 16 of the baby buggy.

Instead of using a single front wheel 9 as shown, it is also possible to use an embodiment of the baby buggy in which the front wheel is a multiple wheel. Furthermore it is conceivable to substitute the front wheel 9 for a different type of support, such as a sphere, a ski or the like. Furthermore it is possible to use a castor as the front wheel.

The invention is not limited to the embodiment as described above, which can be varied in many ways within the scope of the invention as defined in the claims.

## Claims

1. A baby buggy comprising a collapsible frame consisting at least of a left-hand frame part and a right-hand frame part which are interconnected by means of linkages, in such a manner that the width of the frame can be reduced upon collapsing, and wherein each frame part carries at least one rear wheel, **characterized by** a front wheel connected to both frame parts, which extends substantially in the plane of symmetry between the two frame parts, at least in the fully unfolded position of the frame, and which takes up a stable position with respect to the frame, at least in said fully unfolded position of the frame.

2. A baby buggy according to claim 1, **characterized in that** the front wheel is mounted in a bearing member which is connected to the frame parts by means of two connecting rods, wherein each connecting rod is hinged to the bearing member with one end, by means of a first hinge, and to the frame part in question with its other end, by means of a second hinge, and wherein the two first and/or second hinges take up an extreme hinged position in the fully unfolded position of the frame.

3. A baby buggy according to claim 2, **characterized in that** the two first and/or second hinges take up an extreme hinged position in the fully collapsed position of the frame.

4. A baby buggy according to claim 2 or 3, **characterized in that** said extreme position(s) is (are) defined by the geometry of the hinge and/or of stops mating with the hinges.

5. A baby buggy according to claim 4, **characterized in that** the extreme hinged position in the fully unfolded position of the frame, which position is defined by stops, concerns the first hinges **in that** case, whilst the extreme hinged position in the fully collapsed position of the frame, which is defined by the geometry thereof, concerns the second hinges.

6. A baby buggy according to claim 1, **characterized in that** the front wheel is mounted in a bearing member which is fixedly connected to one of the two frame parts and movably connected to the other frame part.

7. A baby by the according to claim 6, **characterized in that** the bearing member is connected to the other frame part by means of a connecting rod, wherein the connecting rod is hinged to the bearing member with one end and to the frame part in question with its other end.

8. A baby buggy according to any one of the preceding claims, **characterized in that** the front wheel is a multiple wheel.

9. A baby buggy according to any one of the preceding claims, **characterized in that** at least the front wheel has been substituted for a different type of support, such as a sphere, a ski or the like.
